# EUROPEAN PATENT SPECIFICATION

(11) **EP 2 279 352 B1**
(45) Date of publication and mention of the grant of the patent: **16.03.2016**
(21) Application number: 09738458.0
(22) Date of filing: 28.04.2009
(51) Int. Cl.: F04D 29/059, F04D 29/056, F01D 25/16, F16C 19/18, F16C 19/54

(54) **BEARING DEVICE FOR SUPERCHARGER**
LAGERVORRICHTUNG FÜR AUFLADER
DISPOSITIF DE SUPPORT POUR COMPRESSEUR

(30) Priority: 28.04.2008 JP 2008116734
(43) Date of publication of application: 02.02.2011
(73) Proprietor: TOYOTA JIDOSHA KABUSHIKI KAISHA, Toyota-shi, Aichi-ken, 471-8571 (JP); JTEKT Corporation, Osaka-shi Osaka 542-8502 (JP)
(72) Inventor: KITADA, Takayoshi, Aichi-ken 471-8571 (JP); OKUMURA, Tsuyoshi, Osaka 542-8502 (JP)
(74) Representative: Intès, Didier Gérard André
(86) International application number: PCT/IB2009/005400
(87) International publication number: WO 2009/133445

(56) References cited:
- WO-A-2006/046891
- WO-A-2008/011400
- WO-A-2008/136481
- DE-U1-202004 017 194
- US-A1- 2003 072 509
- US-A1- 2003 190 242
- US-A1- 2005 287 018

## Description

### BACKGROUND OF THE INVENTION

### 1. Field of the Invention

The present invention relates to a bearing device for a supercharger that is used for an internal combustion engine, etc.

### 2. Description of the Related Art

For example, as a bearing device for a supercharger, Japanese Patent Application Publication No. 4-72424 (JP-A-4-72424), Japanese Patent Application Publication No. 4-8825 (JP-A-4-8825), Japanese Utility Model Publication 6-40908 (JP-Y-6-40908), Japanese Utility Model Application Publication 62-35195 (JP-U-62-35195), and Japanese Patent Application Publication 8-284675 (JP-A-8-284675) describe a bearing device in which an elastic member, such as a coil spring, is disposed between outer races of paired ball bearings that are fitted on a rotary shaft, in which a preload that is generated by repulsive force of the elastic member is applied to the ball bearings, and in which an oil-film damper supports the outer races of the ball bearings. In addition, for example, Japanese Patent Application Publication 2002-369474 (JP-A-2002-369474) describes a bearing device in which a spacer is disposed between inner races of paired ball bearings and also between outer races thereof to maintain a fixed distance between the ball bearings and in which the outer races are constrained in an axial direction of the outer races by abutting end surfaces of the outer races against an abutment portion on a housing side. The former bearing device and the latter bearing device have different positioning structures of the outer rings in the axial direction. In other words, in a bearing device such as the former bearing device in which the preload is applied by the elastic member between the outer races, because the outer races (or a member that is integrated with the outer races) are pressed to a rolling element by the force of the elastic member, it is essential that the outer races are not constrained in a direction that the outer races are pushed out, that is, outward in the axial direction. On the other hand, in a bearing device such as the latter bearing device that does not employ the elastic member for the preload, it is common that the outer races are constrained from the outside in the axial direction in order to avoid displacement of the outer races.
WO 2006/046891 discloses a bearing device for a supercharger according to the preamble of claim 1.

It is preferable that friction loss of the ball bearings be reduced for high-speed rotation of the rotary shaft. However, the friction loss increases with preload. Meanwhile, it is essential to support the ball bearings by the oil-film damper in a high-rotational range over 100,000 rpm. In order to satisfy both requirements, in a bearing device such as one described JP-A-2002-369474, which is not provided with the elastic member like a spring between the outer races, a retaining member to which the outer races of the ball bearings are fitted is provided separately from a bearing housing, and an oil film is formed in a clearance between the retaining member and the bearing housing. However, if the outer races are constrained by abutting the outer end surfaces thereof against the bearing housing in the axial direction of the outer races, as in the device in JP-A-2002-369474, an axial force acts on the outer races of the bearings from the bearing housing when the outer races are displaced in the axial direction by a vibration absorption effect of the oil-film damper. Therefore, the improper axial force acts on the bearings by the conflict between the axial force that is transmitted from the inner races to the outer races via the rolling element and force that acts on the outer races from the bearing housing side. Consequently, disadvantages such as displacement of the outer races may occur to decrease durability of the bearings.

### SUMMARY OF THE INVENTION

Thus, the present invention provides a bearing device for a supercharger with high adaptability to high-speed rotation and with high durability of a bearing.

The bearing device for a supercharger according to an aspect of the present invention includes: a pair of ball bearings that are disposed on a rotary shaft of a supercharger; a retaining member that is a separate component from the pair of ball bearings and to which outer races of the paired ball bearings are fitted; a bearing housing that is combined with the retaining member to form an oil-film damper, which is an oil film that functions as a damper to support the outer races; an inner-race spacer, that is disposed between inner races of the paired ball bearings, that maintains a fixed distance between the inner races in an axial direction; an outer-race spacer, disposed between the outer races, that maintains a fixed distance between the outer races in the axial direction. The outer races are located inward of end surfaces of the retaining member in the axial direction. The oil film is formed in a clearance between the retaining member and the bearing housing. An outer periphery and the axial end faces of the retaining member face the bearing housing via the clearance in which the oil film is formed. The outer races are fitted to the retaining member in an unconstrained state to the outside in the axial direction, axial dimensions of the inner-race spacer and the outer-race spacer are set in a manner that preload does not act on the ball bearing, and the bearings are assembled without preload.

In the bearing device according to the aspect of the present invention, the inner-race spacer and the outer-race spacer respectively maintain the fixed distance between the inner races and the fixed distance between the outer races of the bearings. Therefore, it is possible to optimize the positions of the inner races and the outer races and thus to reduce friction loss of the ball bearings by maintaining the dimension of each of the spacers within an appropriate range in the axial direction. Because the outer races of the bearings are supported by the oil-film damper, it is also possible to increase a vibration absorption effect. Accordingly, it is possible to increase the adaptability of the supercharger to the high-speed rotation. In addition, because the outer races are located inward of both of the end surfaces of the retaining member in the axial direction, the end surfaces of the retaining member abut against the bearing housing when the outer races are displaced in the axial direction. Therefore, the bearing housing does not contact the outer races. The retaining member is a separate component from the outer races of the rolling bearings, and the outer races are fitted to the retaining member in the unconstrained state to the outside in the axial direction. Thus, only the axial force acts on the outer races from the inner races via the rolling element, and force that conflicts with the axial force does not act on the outer races from the bearing housing side. Therefore, improper force in the axial direction does not act on the ball bearings, and thus it is possible to increase the durability of the bearings.

In the bearing device according to the above aspect, the retaining member may be integrally formed with the outer-race spacer. With the configuration in which the retaining member is integrally formed with the outer-race spacer, the misalignment between the retaining member and the outer-race spacer can be prevented. For example, when the outer-race spacer is fitted in an inner periphery of the retaining member, there is a possible change in a positional relationship between the retaining member and the outer-race spacer. A change in the positional relationship may occur when the axial force acts frequently on the outer races, when a foreign matter intrudes between the fitting surfaces of the retaining member and the outer-race spacer, or when corrosion occurs in the fitting surfaces, for example. However, the positional relationship between the retaining member and the outer-race spacer can be kept constant by integrally forming the retaining member and the outer-race spacer. Thus, it is possible to increase the durability of the bearings by preventing the misalignment of the inner races and the outer races.

Moreover, in the bearing device according to the above aspect, the retaining member and the outer-race spacer may be formed as separate components from each other and may be combined to prevent relative displacement to each other in the axial direction. According to this aspect, because the retaining member and the outer-race spacer are formed as the separate components from each other, it is possible to increase freedom in choice of a material for the retaining member and a material for the outer-race spacer.

In the bearing device according to the above aspect, the retaining member and the outer-race spacer may be formed to prevent the relative displacement to each other in the axial direction by press fit or shrink fit.

In the bearing device according to the above aspect, the oil film may be formed in a clearance between the retaining member and the bearing housing, and the outer periphery of the retaining member and the end surfaces thereof in the axial direction may face the bearing housing via the clearance in which the oil film is formed. According to this aspect, because there are clearances in a radial direction and the axial direction of the retaining member, the retaining member can move smoothly in the radial direction and in the axial direction. Consequently, it is possible to increase the vibration absorption effect of the oil-film damper.

In the bearing device according to the above aspect, the end surfaces of the retaining member in the axial direction may be held by the bearing housing.

In the bearing device according to the above aspect, the clearances may be formed in all the areas where the outer periphery of the retaining member and the end surfaces thereof in the axial direction face the bearing housing.

In the bearing device according to the above aspect, the supercharger may be a turbocharger. An oil slinger that is integrally rotatable with the rotary shaft may be disposed between the ball bearing on a turbine rotor side and the turbine rotor, and may be provided with a cylindrical portion and a fin that protrudes from the cylindrical portion to the outer periphery in the radial direction. The clearance between the end surface of the retaining member on the turbine rotor side in the axial direction and the bearing housing may be located on the cylindrical portion. According to this aspect, lubrication oil that is discharged from the clearance between the end surface of the retaining member in the axial direction and the bearing housing is dropped onto the cylindrical portion of the oil slinger to cool the oil slinger. Then, the lubrication oil may be blown off from the fin of the oil slinger to the outer periphery by centrifugal force. Accordingly, it is possible to prevent an increase in temperature around the bearings that could be caused by heat on the turbine rotor side and also to prevent intrusion of the lubrication oil into the turbine rotor side.

In the bearing device according to the above aspect, the dimensions of the inner-race spacer and the outer-race spacer in the axial direction are set to prevent preload from acting on the ball bearings. With the above configuration, it is possible to significantly improve the adaptability of the supercharger to the high-speed rotation while the friction loss of the ball bearings can be minimized.

In the bearing device according to the above aspect, the pair of ball bearings may be angular-contact bearings that support a radial load and an outward axial load.

As it has been described so far, in the bearing device for a supercharger in the present invention, a fixed distance between the inner races and that between the outer races are respectively maintained by the inner-race spacer and the outer-race spacer, and the outer races of the bearings are supported by the oil-film damper. Therefore, it is possible to improve the adaptability of the supercharger to the high-speed rotation by inhibiting the friction loss of the bearings and also by increasing the vibration absorption effect. In addition, the retaining member and the outer races are the separate components from each other. The outer races are disposed inward of the end surfaces of the retaining member in the axial direction, and are fitted to the retaining member in the unconstrained state to the outside in the axial direction. Accordingly, only the axial force acts on the outer races from the inner races via the rolling element, and thus the improper axial force does not act on the ball bearings. Therefore, it is possible to increase the durability of the bearings.

### BRIEF DESCRIPTION OF THE DRAWINGS

The foregoing and/or further objects, features and advantages of the invention will become more apparent from the following description of example embodiments with reference to the accompanying drawings, in which like numerals are used to represent like elements and wherein:
FIG. 1 is an axial cross sectional view in an axial direction of a supercharger in which a bearing device according to an embodiment of the present invention is included;
FIG. 2 is an enlarged view of a bearing assembly of the supercharger in FIG. 1;
FIG. 3 is a cross sectional view taken along the line III - III of FIG. 1; and
FIG. 4 is an enlarged view of a vicinity of a bearing on a turbine rotor side in FIG. 1.

### DETAILED DESCRIPTION OF EMBODIMENTS

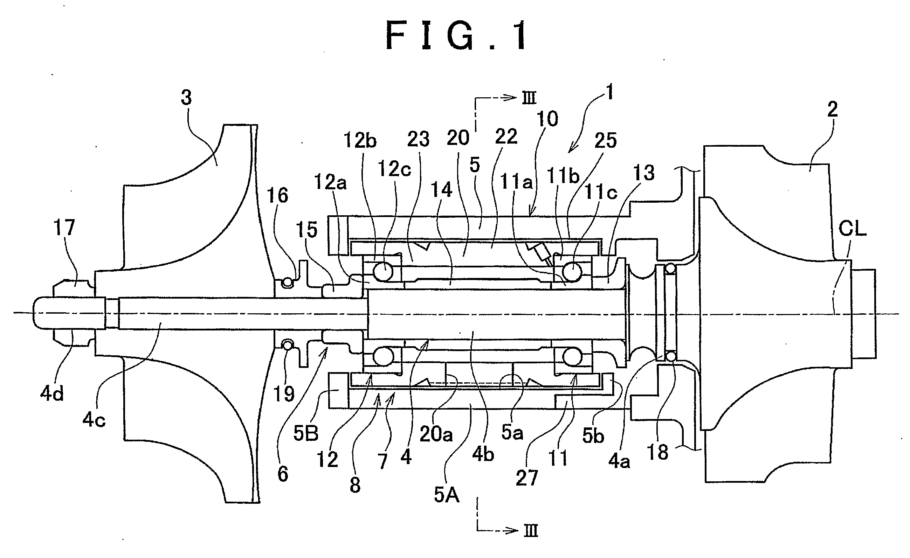

FIG. 1 shows a supercharger 1 that includes a bearing device 10 according to an embodiment of the present invention. The supercharger 1 is constituted as a turbocharger that includes: a turbine rotor 2 that is provided in an exhaust passage of an internal combustion engine; a compressor impeller 3 that is provided in an intake passage of the internal combustion engine; and a turbine shaft 4 as a rotary shaft that couples the turbine rotor 2 with the compressor impeller 3 for unitary rotation. The turbine rotor 2 and the turbine shaft 4 are integrally and coaxially formed with each other. The turbine shaft 4 is a stepped shaft that is provided with a large-diameter portion 4a, a middle-diameter portion 4b, and a small-diameter portion 4c in series from the turbine rotor 2 side to the compressor impeller 3 side.

The middle-diameter portion 4b is inserted in a bearing housing 5 of the supercharger 1 while the small-diameter portion 4c extends through the bearing housing 5 and is inserted in a compressor housing (not shown). The bearing housing 5 employs a configuration in which a retainer 5B is joined to one end of the housing body 5A with fastener means such as a bolt. A pair of bearings 11 and 12 is fitted on the outer periphery of the middle-diameter portion 4b. The bearings 11 and 12 are ball bearings that respectively include inner races 11a and 12a, outer races 11b and 12b, and a number of balls 11c, and 12c as rolling elements that are respectively disposed between the inner races 11a and 12a and the outer races 11b and 12b. More specifically, the bearings 11 and 12 are angular contact bearings that support a radial load and an axial load in one direction. The inner races 11a and 12a of the bearings 11 and 12 are fitted on the turbine shaft 4. A fit tolerance between the turbine shaft 4 and each of the inner races 11a, and 12a is within a range of transition fit (a range between a tight fit and a loose fit). The bearing 11 supports the axial load in a direction from the compressor impeller 3 to the turbine rotor 2 while the bearing 12 supports the axial load from the turbine rotor 2 to the compressor impeller 3.

An oil slinger 13 is provided between the inner race 11a of the bearing 11 and the large-diameter portion 4a. A sleeve 14 is provided as an inner-race spacer between the inner races 11a and 12a. Collars 15 and 16 and the compressor impeller 3 are fitted in sequence on the outer periphery of the small-diameter portion 4c. An external thread 4d at the end of the small-diameter portion 4c projects from the compressor impeller 3. By providing a nut 17 on the external thread 4d and tightening the nut 17, the oil slinger 13, the inner race 11a, the sleeve 14, the inner race 12a, the collars 15 and 16, and the compressor impeller 3 are held in place between the large-diameter portion 4a and the nut 17, and are each held in a specified place in the axial direction. Accordingly, the turbine rotor 2, the turbine shaft 4, the oil slinger 13, the inner race 11a, the sleeve 14, the inner race 12a, the collars 15 and 16, the compressor impeller 3, and the nut 17 are constructed as a rotary assembly 6 that can integrally rotate about an axis CL of the turbine shaft 4. Seal rings 18 and 19 are provided on the large-diameter portion 4a and the collar 16, respectively, to seal a space between a turbine housing and the bearing housing and a space between the bearing housing and a compressor housing.

The outer races 11b and 12b of each respective bearing 11 and 12 is fitted with a holder 20. The holder 20 is fitted with a holder accommodating portion 5a of the housing body 5A in the bearing housing 5. The retainer 5B of the bearing housing 5 is attached to an open end (an end on the compressor impeller 3 side) of the holder accommodating portion 5a. Thus, the holder 20 is held between a projection 5b and the retainer 5B of the bearing housing 5 in the axial direction of the turbine shaft 4. It should be noted that both of the sleeve 14 and the holder 20 are separate components from the bearings 11 and 12. Therefore, compared to bearing steel, etc. that is used for the inner races 11a and 12a and the outer races 11b and 12b, the sleeve 14 and the holder 20 may be made from a less expensive material. For example, the sleeve 14 and the holder 20 may be made from carbon steel for a mechanical structure.

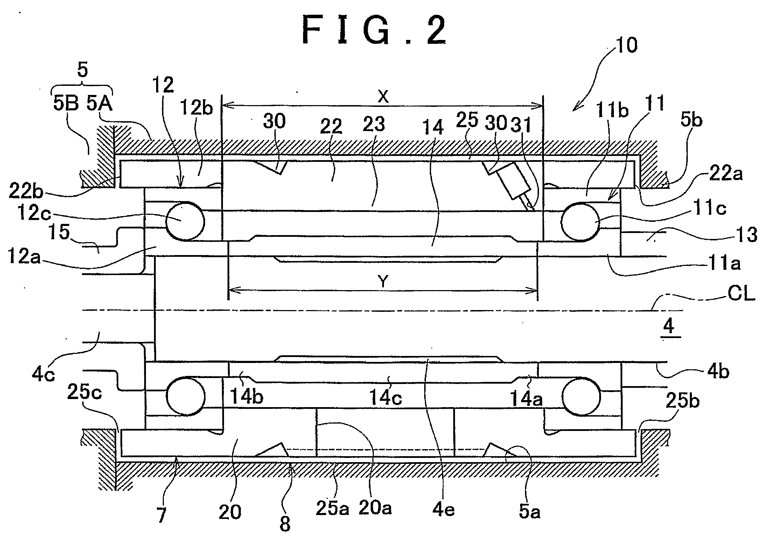

As shown in detail in FIG. 2, the holder 20 employs a configuration in which a cylindrical case 22, which serves as a retaining member, is disposed on the outer periphery of the outer races 11b and 12b is integrated with a spacer 23 as an outer-race spacer that projects to the inner periphery side of the case 22 and that is interposed between the outer races 11b and 12b. Both end faces 22a and 22b of the case 22 in the axial direction are located outward of the outer races 11b and 12b in the axial direction. In other words, the outer races 11b and 12b are fitted to the holder 20 in a manner that the outer races 11b and 12b are located inward of the end faces 22a and 22b of the case 22 in the axial direction. A fit tolerance between the holder 20 and each of the outer races 11b and 12b may be within a range of transition fit (a range between a tight fit and a loose fit).

Both ends of the spacer 23 abut against the outer races 11b and 12b. Accordingly, the outer races 11b and 12b are positioned in the axial direction to maintain a fixed distance between the outer rings 11b and 12b in the axial direction. Then, a bearing assembly 7 is formed by assembling the bearings 11 and 12, the sleeve 14, and the holder 20 together appropriately. The misalignment of the inner races 11a and 12a and the outer races 11b and 12b in the axial direction is minimized by keeping the axial dimension X of the spacer 23 and the axial dimension Y of the sleeve 14 within appropriate ranges. Thus, the inner races 11a and 12a and the outer races 11b and 12b are held in positions where preload does not act on the inner races 11a and 12a and the outer races 11b and 12b. Accordingly, it is possible to improve supercharging performance by minimizing play of the turbine shaft 4 in the axial direction and by setting slight clearances between the turbine rotor 2 and the turbine housing and between the compressor impeller 3 and the compressor housing. Here, no member is provided on the outside of the outer races 11b and 12b in the axial direction to hold the outer races 11b and 12b in space from the outside. In other words, the outer races 11b and 12b are each fitted to the holder 20 in an unconstrained state to the outside in the axial direction. In addition, no elastic member such as a spring is provided between the outer races 11b and 12b to push out the outer races 11b and 12b in the axial direction and to apply the preload to the outer races 11b and 12b. It is possible to inhibit frictional loss in the bearings 11 and 12 by assembling the bearings 11 and 12 without the preload.

A slight clearance 25 is provided between the holder 20 and the bearing housing 5. The clearance 25 includes a radial clearance 25a on the outer periphery side of the holder 20 and axial clearances 25b and 25c at both ends of the holder 20 in the axial direction. The radial clearance 25a extends across the entire outer periphery of the holder 20 while the axial clearances 25b and 25c respectively extend across the entire end faces 22a and 22b of the holder 20. In other words, when the oil film, which is described later, is not formed, the holder 20 is free to move in the radial direction with respect to the bearing housing 5 for a distance equivalent to the radial clearance 25a and can also move in the axial direction for distances equivalent to the axial clearances 25b and 25c.

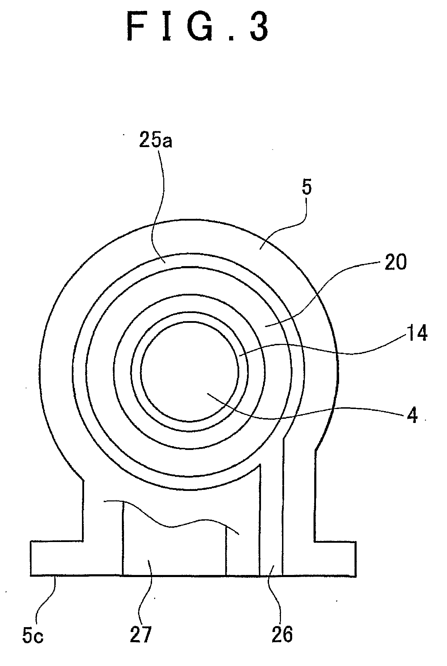

As shown in FIG. 3, the bearing housing 5 is provided with a fuel passage 26 that leads to the radial clearance 25a from a bottom face 5c of the bearing housing 5. Lubricating oil is supplied and filled in the radial clearance 25a through the oil passage 26 to form an oil film between the holder 20 and the bearing housing 5. An oil-film damper 8 is constituted by the oil film, the holder 20, and the bearing housing 5. The outer races 11b and 12b are supported by the oil-film damper 8. As described above, it is possible to efficiently absorb vibration of the bearing assembly 7 by providing the oil-film damper 8. Therefore, it is possible to improve the adaptability of the supercharger 1 to a high-speed rotating range over 100,000 rpm. Because the clearances 25a, 25b and 25c are provided in the radial and axial directions of the holder 20, the holder 20 can move smoothly in the radial and axial directions with respect to the bearing housing 5. Consequently, it is possible to improve the vibration absorption of the oil-film damper 8.

The vibration of the bearing assembly 7 in the axial direction is inhibited because the end faces 22a and 22b of the holder 20 abut, respectively, against the projection 5b and the retainer 5B of the bearing housing 5. In addition, because the outer races 11b and 12b are located inward of both of the end faces 22a and 22b of the holder 20, the outer races 11b and 012b do not come in direct contact with the bearing housing 5. Furthermore, the holder 20 and the outer races 11b and 12b are separate components from each other, and the outer races 11b and 12b are fitted to the holder 20 in the unconstrained state to the outside in the axial direction. Therefore, the outer races 11b and 12b are only displaced with the axial forces that are transmitted from the inner races 11a and 12b through the balls 11c and 12c, and thus no unnecessary external force acts on the bearings 11 and 12 in the axial direction. Consequently, the durability of the bearings 11 and 12 increases. In other words, in a conventional bearing device, in which an elastic member for preload is disposed between outer races, it is a precondition for the application of the preload that the outer races are unconstrained to the outside in the axial direction. In contrast, there is no such precondition for the bearing device 10 of this embodiment because no elastic member for the preload is provided between the outer races 11b and 12b. It is also possible to constrain the outer races 11b and 12b from the outside in the axial direction. However, in spite of the above possibility, the outer races 11b and 12b remain unconstrained to the outside in the axial direction. Thus, the bearing device differs in a positional structure of the outer races from a conventional bearing device, in which no elastic member for the preload is provided. Moreover, due to the adoption of the supporting structure with the oil-film damper 8, the axial displacement of the bearing assembly 7 is permitted in the bearing device 10 of this embodiment, thereby causing the possible application of the axial force to the outer races 11b and 12b from the bearing housing 5 side. In order to eliminate such a possibility, the outer races 11b and 12b are unconstrained.

It should be noted that the clearance 25 is exaggerated in FIG. 1 to FIG. 3. The clearance 25 need only be as large as the minimum dimension required to form the oil film. Because fuel is supplied upward to the clearance 25 from the bottom face of the bearing housing 5, it is possible to push up the holder 20 with pressure of the lubricating oil that flows into the clearance 25. Accordingly, the vibration absorption effect of the oil-film damper 8 may easily be secured even with decreased hydraulic pressure.

As shown in FIG 2, the diameters of both end faces 14a and 14b of the sleeve 14 are smaller than the diameter a middle portion 14c of the sleeve. The diameters of the end faces 14a and 14b are substantially the same as the external diameters of the inner races 11a and 12a. Meanwhile, a recess 4e is formed in a fitting portion of the middle portion 4b of the turbine shaft 4 with the sleeve 14. The length of the recess 4e in the axial direction is shorter than that of the middle portion 14c of the sleeve 14, and both ends of the recess 4e in the axial direction are located inward of both ends of the middle portion 14c of the sleeve 14 in the axial direction. Furthermore, the depth of the recess 4e is set as the shallowest possible. By providing such a recess 4e, the inner race 11a can easily be moved in the recess 4e when the inner race 11a of the bearing 11 is assembled with the turbine shaft 4. Therefore, the inner race 11a may be assembled smoothly. Because the middle portion 14c of the sleeve 14 has a large diameter to correspond with the recess 4e, and also because the middle portion 14c is provided in sufficient length on both sides of the recess 4e in the axial direction, it is possible to enhance rigidity around of the turbine shaft 4 and also to improve the adaptability of the supercharger 1 to the high-speed rotation.

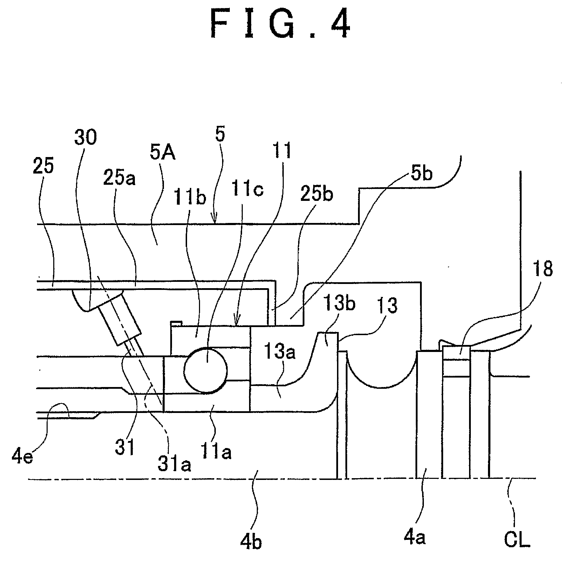

Two annular grooves 30 are formed in the outer periphery of the holder 20 to make complete circles. In each of the annular groves 30, an oil jet hole 31 is provided to supply lubricating oil to the bearings 11 and 12. Here, although the oil jet hole 31 in the bearing 11 is only shown in FIG. 2, the same oil jet hole 31 is also provided in the bearing 12. As shown in FIG. 4, the oil jet hole 31 is provided so that a center line 31a the oil jet hole 31 extends toward face of the inner race 11a that abuts the sleeve 14. Accordingly, part of the lubricating oil that forms the oil film is supplied from the oil jet hole 31 to the mating face of the inner race 11a with the sleeve 14 and its surrounding area. Therefore, compared to a case in which lubricating oil is directly sprayed to the balls 11c, it is possible to reduce circulation loss of lubricating oil and thus to increase supercharging efficiency. The same functions and advantages are applicable to the bearing 12. In addition, especially when the oil jet hole 31 on the turbine rotor 2 side is formed as described above, it is possible to improve cooling efficiency of the supercharger 1 by absorbing the heat transmitted from the turbine rotor 2 to the bearing 11 and the sleeve 14 via the turbine shaft 4 using the lubricating oil from the oil jet hole 31.

As it is clear from FIG. 4, the oil slinger 13 is formed with a disc-shaped fin 13b on one end of a cylindrical portion 13a. The diameter of the cylindrical portion 13a is either equal to or smaller than the exterior diameter of the inner race 11a. Meanwhile, the diameter of the fin 13b is slightly smaller than the external diameter of the outer race 11b. The axial clearance 25b between the end face 22a of the holder 20 in the axial direction and the projection 5b of the bearing housing 5 is located on the outer periphery of the cylindrical portion 13a of the oil slinger 13. Therefore, lubricating oil that is discharged from the axial clearance 25b adheres on the cylindrical portion 13a, runs from the cylindrical portion 13a to the fin 13b while cooling the oil slinger 13, and then is blown off to the outer periphery of the fin 13b by centrifugal force. Accordingly, it is possible to prevent lubricating oil from entering the turbine housing side or the exhaust passage. Lubricating oil that is blown off to the inside of the bearing housing 5 from the oil slinger 13 is discharged through a drain 27 of the bearing housing 5 (FIG. 1 and FIG. 3). In addition, oil supplied to lubricate the bearings 11 and 12 is discharged through a drain hole 20a of the holder 20 (FIG. 1 and FIG. 2).

The present,invention is not limited to the embodiment described above and can be implemented in various embodiments. For example, the holder 20 may be configured so that the case 22 and the spacer 23 are separate components that are assembled in a post process. In this case, it is preferable that the spacer 23 be assembled with the case 22 by utilizing a bonding method such as press fit or shrink fit such that the spacer 23 cannot be displaced relative to the case 22 in the axial direction. The bearing device of the present invention may be applied not only to a rotary shaft of a turbocharger but also to a rotary shaft of a mechanical supercharger that is driven by an output shaft of an internal combustion engine. The ball bearing is not restricted to angular contact ball bearings, any of various types of ball bearings may be employed as long as the bearings have a configuration in which a rolling element is disposed between an inner race and an outer race.

While the invention has been described with reference to example embodiments thereof, it should be understood that the invention is not limited to the described embodiments or constructions. To the contrary, the invention is intended to cover various modifications and equivalent arrangements. In addition, while the various elements of the example embodiments are shown in various example combinations and configurations, other combinations and configurations, including more or less elements, are also within the scope of the invention as defined by the appended claims.

## Claims

1. A bearing device for a supercharger (1), comprising:
a pair of ball bearings (11, 12) that are disposed on a rotary shaft (4) of the supercharger (1);
a retaining member (22) that is a separate component from the pair of ball bearings (11, 12) and to which outer races (11b, 12b) of the pair of ball bearings (11, 12) are fitted;
a bearing housing (5) that is assembled with the retaining member (22) to form an oil-film damper (8), which is an oil film that functions as a damper to support the outer races (11b, 12b);
an inner-race spacer (14), disposed between inner races (11a, 12a) of the pair of ball bearings (11, 12), that maintains a fixed distance (Y) between the inner races (11a, 12a) in an axial direction; and
an outer-race spacer (23), disposed between the outer races (11b, 12b), that maintains a fixed distance (X) between the outer races (11b, 12b) in the axial direction,
wherein the outer races (11b 12b) are located inward of end faces (22a, 22b) of the retaining member (22) in the axial direction and are fitted to the retaining member (22),
the oil film is formed in a clearance between the retaining member (22) and the bearing housing (5), and
an outer periphery and the axial end faces (22a, 22b) of the retaining member (22) face the bearing housing (5) via the clearance in which the oil film is formed,
**characterized in that** the outer races (11b, 12b) are fitted to the retaining member (22) in an unconstrained state to the outside in the axial direction, **in that** axial dimensions of the inner-race spacer (14) and the outer-race spacer (23) are set in a manner that preload does not act on the ball bearing, and **in that** the bearings are assembled without preload.

2. The bearing device according to claim 1, wherein the retaining member (22) and the outer-race spacer (23) are formed integrally with each other.

3. The bearing device according to claim 1, wherein the retaining member (22) and the outer-race spacer (23) are formed as separate components from each other and are assembled together to prevent relative displacement to each other in the axial direction.

4. The bearing device according to claim 3, wherein the retaining member (22) and the outer-race spacer (23) are assembled to prevent relative displacement in the axial direction by press fit or shrink fit.

5. The bearing device according to claim 1, wherein the end faces (22a, 22b) of the retaining member (22) in the axial direction are held by the bearing housing (5).

6. The bearing device according to claim 5, wherein the clearance is provided in an entire area where the outer periphery and the end faces (22a, 22b) of the retaining member (22) in the axial direction face the bearing housing (5).

7. The bearing device according to any one of claims 1 to 6, wherein
the supercharger (1) is a turbocharger,
an oil slinger (13) for unitary rotation with the rotary shaft (4) is disposed between the ball bearing on a turbine rotor (2) side and the turbine rotor (2),
a cylindrical portion (13a) and a fin (13b) that projects from the cylindrical portion (13a) to the outer periphery in a radial direction are provided in the oil slinger (13), and
the clearance between the end face of the retaining member (22) on the turbine rotor (2) side in the axial direction and the bearing housing (5) is located on the cylindrical portion (13a).

8. The bearing device according to any one of claims 1 to 7, wherein
the pair of ball bearings (11, 12) are angular-contact bearings that support a radial load and an outward axial load.

## Patentansprüche

1. Lagervorrichtung für einen Lader (1), umfassend:
ein Paar von Kugellagern (11, 12), die auf einer Drehwelle (4) des Laders (1) angeordnet sind,
ein Halteglied (22), das eine von dem Paar von Kugellagern (11, 12) getrennte Komponente ist und an welchem Außenringe (11 b, 12b) des Paars von Kugellagern (11, 12) angebracht sind,
ein Lagergehäuse (5), das mit dem Halteglied (22) zusammengebaut ist, um einen Ölfilmdämpfer (8) zu bilden, welcher ein Ölfilm ist, der als Dämpfer funktioniert, um die Außenringe (11 b, 12b) zu tragen,
ein Innenring-Distanzstück (14), das zwischen Innenringen (11a, 12a) des Paars von Kugellagern (11, 12) angeordnet ist und einen festen Abstand (Y) zwischen den Innenringen (11a, 12a) in einer axialen Richtung aufrechterhält, und
ein Außenring-Distanzstück (23), das zwischen den Außenringen (11 b, 12b) angeordnet ist und einen festen Abstand (X) zwischen den Außenringen (11 b, 12b) in der axialen Richtung aufrechterhält,
wobei die Außenringe (11 b, 12b) von Endflächen (22a, 22b) des Halteglieds (22) in der axialen Richtung einwärts angeordnet sind und an dem Halteglied (22) angebracht sind,
der Ölfilm in einem Zwischenraum zwischen dem Halteglied (22) und dem Lagergehäuse (5) gebildet ist, und
ein Außenumfang und die axialen Endflächen (22a, 22b) des Halteglieds (22) dem Lagergehäuse (5) über den Zwischenraum, in dem der Ölfilm gebildet ist, gegenüberliegen,
**dadurch gekennzeichnet, dass** die Außenringe (11 b, 12b) an dem Halteglied (22) in einem zwangfreien Zustand an der Außenseite in der axialen Richtung angebracht sind, dadurch, dass die axialen Abmessungen des Innenring-Distanzstücks (14) und des Außenring-Distanzstücks (23) derart ausgelegt sind, dass keine Vorspannung auf das Kugellager wirkt, und dadurch, dass die Lager ohne Vorspannung zusammengebaut sind.

2. Lagervorrichtung nach Anspruch 1, wobei das Halteglied (22) und das Außenring-Distanzstück (23) einstückig miteinander ausgebildet sind.

3. Lagervorrichtung nach Anspruch 1, wobei das Halteglied (22) und das Außenring-Distanzstück (23) als voneinander getrennte Komponenten ausgebildet sind und zusammengebaut sind, um eine zueinander relative Verlagerung in der axialen Richtung zu verhindern.

4. Lagervorrichtung nach Anspruch 3, wobei das Halteglied (22) und das Außenring-Distanzstück (23) zusammengebaut werden, um eine relative Verlagerung in der axialen Richtung mittels Presssitz oder Schrumpfsitz zu verhindern.

5. Lagervorrichtung nach Anspruch 1, wobei die Endflächen (22a, 22b) des Halteglieds (22) in der axialen Richtung durch das Lagergehäuse (5) gehalten werden.

6. Lagervorrichtung nach Anspruch 5, wobei der Zwischenraum in einem gesamten Bereich vorgesehen ist, wo der Außenumfang und die Endflächen (22a, 22b) des Halteglieds (22) in der axialen Richtung dem Lagergehäuse (5) gegenüberliegen.

7. Lagervorrichtung nach einem beliebigen der Ansprüche 1 bis 6, wobei
der Lader (1) ein Turbolader ist,
ein Ölschleuderring (13) zur einstückigen Drehung mit der Drehwelle (4) zwischen dem Kugellager auf einer Turbinenrotor(2)-Seite und dem Turbinenrotor (2) angeordnet ist,
ein zylindrischer Abschnitt (13a) und eine Rippe (13b), die von dem zylindrischen Abschnitt (13a) zu dem Außenumfang in einer radialen Richtung vorsteht, in dem Ölschleuderring (13) vorgesehen sind, und
der Zwischenraum zwischen der Endfläche des Halteglieds (22) auf Turbinenrotor(2)-Seite in der axialen Richtung und dem Lagergehäuse (5) an dem zylindrischen Abschnitt (13a) angeordnet ist.

8. Lagervorrichtung nach einem beliebigen der Ansprüche 1 bis 7, wobei
das Paar von Kugellagern (11, 12) Schräglager sind, die eine radiale Last und eine nach außen gerichtete axiale Last tragen.

## Revendications

1. Dispositif de paliers pour un compresseur de suralimentation (1), comprenant :
une paire de roulements à billes (11, 12) qui sont disposés sur un arbre rotatif (4) du compresseur de suralimentation (1) ;
un élément de maintien (22) qui est un composant distinct de la paire de roulements à billes (11, 12) et sur lequel sont montées les bagues extérieures (11b, 12b) de la paire de roulements à billes (11, 12) ;
un carter de paliers (5) qui est assemblé avec l'élément de maintien (22) pour former un amortisseur à film d'huile (8), qui est un film d'huile qui fonctionne comme un amortisseur pour supporter les bagues extérieures (11b, 12b) ;
un écarteur de bagues intérieures (14), disposé entre les bagues intérieures (11a, 12a) de la paire de roulements à billes (11, 12), qui maintient une distance fixe (Y) entre les pistes intérieures (11a, 12a) dans la direction axiale ; et
un écarteur de bagues extérieures (23), disposé entre les bagues extérieures (11b, 12b), qui maintient une distance fixe (X) entre les bagues extérieures (11b, 12b) dans la direction axiale,
dans lequel les bagues extérieures (11b, 12b) sont situées à l'intérieur des faces d'extrémité (22a, 22b) de l'élément de maintien (22) dans la direction axiale et sont montées dans l'élément de maintien (22),
dans lequel le film d'huile est formé dans un jeu entre l'élément de maintien (22) et le carter de paliers (5), et
dans lequel la périphérie extérieure et les faces d'extrémité axiale (22a, 22b) de l'élément de maintien (22) font face au carter de paliers (5) via le jeu dans lequel est formé le film d'huile,
**caractérisé en ce que** les bagues extérieures (11b, 12b) sont montées dans l'élément de maintien (22) dans un état non contraint à l'extérieur dans la direction axiale, **en ce que** les dimensions axiales de l'écarteur de bagues intérieures (14) et de l'écarteur de bagues extérieures (23) sont fixées de manière qu'il n'y ait pas de précontrainte qui agisse sur le roulement à billes, et **en ce que** les paliers sont assemblés sans précontrainte.

2. Dispositif de paliers selon la revendication 1, dans lequel l'élément de maintien (22) et l'écarteur de bagues extérieures (23) sont formés d'un seul tenant l'un avec l'autre.

3. Dispositif de paliers selon la revendication 1, dans lequel l'élément de maintien (22) et l'écarteur de bagues extérieures (23) sont formés comme des composants distincts l'un de l'autre et sont assemblés ensemble pour empêcher un déplacement relatif de l'un par rapport à l'autre dans la direction axiale.

4. Dispositif de paliers selon la revendication 3, dans lequel l'élément de maintien (22) et l'écarteur de bagues extérieures (23) sont assemblés pour empêcher un déplacement relatif dans la direction axiale par assemblage à la presse ou par rétreint.

5. Dispositif de paliers selon la revendication 1, dans lequel les faces d'extrémité (22a, 22b) de l'élément de maintien (22) dans la direction axiale sont tenues par le carter de paliers (5).

6. Dispositif de paliers selon la revendication 5, dans lequel le jeu est ménagé dans toute la surface où la périphérie extérieure et les faces d'extrémité (22a, 22b) de l'élément de maintien (22) dans la direction axiale font face au carter de paliers (5).

7. Dispositif de paliers selon l'une quelconque des revendications 1 à 6,
dans lequel le compresseur de suralimentation (1) est un turbocompresseur,
dans lequel une bague de projection d'huile (13) destinée à tourner d'un seul bloc avec l'arbre rotatif (4) est disposée entre le roulement à billes du côté rotor de turbine (2) et le rotor de turbine (2),
dans lequel une partie cylindrique (13a) et une ailette (13b) qui fait saillie de la partie cylindrique (13a) vers la périphérie extérieure dans la direction radiale sont disposées dans la bague de projection d'huile (13), et
dans lequel le jeu entre la face d'extrémité de l'élément de maintien (22) du côté rotor de turbine (2) dans la direction axiale et le carter de paliers (5) est situé sur la partie cylindrique (13a).

8. Dispositif de paliers selon l'une quelconque des revendications 1 à 7, dans lequel les roulements de la paire de roulements à billes (11, 12) sont des roulements à contact angulaire qui supportent un effort radial et un effort axial vers l'extérieur.
